# EUROPÄISCHE PATENTSCHRIFT

(11) **EP 2 773 549 B1**
(45) Veröffentlichungstag und Bekanntmachung des Hinweises auf die Patenterteilung: **01.02.2017**
(21) Anmeldenummer: 12786841.2
(22) Anmeldetag: 05.11.2012
(51) Int. Cl.: B62D 21/15

(54) **HILFSRAHMEN MIT SICKEN**
SUBFRAME WITH BEADS
CHÂSSIS AUXILIAIRE MUNI DE MOULURES

(30) Priorität: 03.11.2011 US 201161555156 P
(43) Veröffentlichungstag der Anmeldung: 10.09.2014
(73) Patentinhaber: Magna Presstec AG, 8160 Weiz (AT)
(72) Erfinder: GARNWEIDNER, Peter, A-5112 Lamprechtshausen (AT); LINDTNER, Ernst, A-2500 Baden (AT); HALBAUER, Hannes, A-2604 Theresienfeld (AT); SOPRONI, Istvan, H-9400 Sopran (HU); VORISEK, Thomas, A-2492 Eggendorf (AT)
(74) Vertreter: Glawe, Delfs, Moll
(86) Internationale Anmeldenummer: PCT/EP2012/004602
(87) Internationale Veröffentlichungsnummer: WO 2013/064270

(56) Entgegenhaltungen:
- DE-A1-102009 041 771
- DE-B3- 10 357 628

## Beschreibung

Die Erfindung betrifft einen als Achsträger ausgebildeten Hilfsrahmen für ein Fahrzeug gemäß dem Oberbegriff des Anspruchs 1.

Derartige als Achsträger ausgebildete Hilfsrahmen, die auch als Fahrschemel bezeichnet werden, dienen der Anbringung und Abstützung von Hilfsaggregaten, wie beispielsweise Lenk- oder Differentialgetrieben sowie Motorlagem, und kommen überwiegend bei Personenkraftwagen mit selbsttragender Karosserie zum Einsatz. Außerdem stellen sie Aufnahme- und Anlenkpunkte für die Radaufhängung bereit. Derartige Hilfsträger können sowohl in einem Front- als auch in einem Heckbereich eines Fahrzeugs eingesetzt werden, wobei der Hilfsträger an der Unterseite des Fahrzeugs mit der Karosserie verschraubt wird.

Starr verschraubte Hilfsrahmen dienen außerdem der Versteifung der Fahrzeugkarosserie. Im Falle eines Fahrzeugcrashs kann der Hilfsrahmen als zusätzlicher Lastpfad die dabei auf das Fahrzeug einwirkenden Kräfte durch Deformation zumindest teilweise absorbieren.

Die gattungsgemäße DE 103 57 628 B3 offenbart einen Längsträger für eine Achskonstruktion eines Kraftfahrzeugs, der über den wesentlichen Teil seiner Länge hohl ausgebildet ist und einen viereckigen Querschnitt sowie im Längsverlauf einen bogenförmigen Sollknickbereich aufweist. Der viereckige Querschnitt ist durch zwei miteinander gefügte Längsgurte gebildet. Einer besitzt die Funktion eines sich im Sollknickbereich zuerst verformenden Primärgurts, während der andere als sich zeitlich später verformender Sekundärgurt wirkt. In den Sollknickbereich ist ein zum im Querschnitt U-förmigen Primärgurt distanziertes und mit dem streifenartig ausgebildeten Sekundärgurt gefügtes Deformationselement in Form einer zum Sekundärgurt hin offenen kastenartigen Crashbox integriert. Des weiteren sind in den Längsträger Längssicken eingeprägt.

Die DE 10 2009 041 771 A1 offenbart einen gattungsgemäßen Hilfsrahmen. Dieser Hilfsrahmen besteht im Wesentlichen aus zwei unterbrechungsfrei geformten, rohrförmigen Längsträgem, die an einem Ende über einen Querträger miteinander verbunden sind. Zwischen dem Querträger und dem anderen, gegenüberliegenden Ende der Längsträger ist ein fachwerkartiges einschaliges Versteifungselement mit den beiden Längsträgem verschraubt. Dieses Versteifungselement weist Sollknickstellen in Form von Quersicken auf. Bei einem Crash knickt das Versteifungselement an diesen Sollknickstellen nach unten aus, um eine Blockbildung des Hilfsrahmens zu vermeiden.

Bei den bisher bekannten Hilfsrahmen besteht im Crashfall das Problem, dass das Versteifungselement in dessen unverformten Zustand zwar anfänglich einen hohen Widerstand gegen Verformung aufbringt, um ein entsprechendes Kraftniveau zu erreichen und danach Crash- beziehungsweise Aufprallenergie als Verformungsenergie abbauen zu können. Sobald das Versteifungselement jedoch beginnt auszuknicken, sinkt das Kraftni-veau und damit der mögliche Energieabbau rapide ab. Das Crashverhalten des Hilfsrahmens kann somit nach Ausknicken des Versteifungselements nicht ausreichend gut gesteuert werden.

Der Erfindung liegt die Aufgabe zugrunde, bestehende Hilfsrahmen dahingehend zu verbessern, dass diese einerseits gute mechanische Eigenschaften wie Festigkeit, Steifigkeit, Akustik oder Versteifung der Karosserie im Fahrbetrieb sicherstellen und andererseits ausreichend Verformungsenergie im Crashfall aufnehmen und dabei dennoch mit einem geringen Bauteilgewicht und gleichzeitig einfach und kostengünstig herstellbar sind.

Diese Aufgabe wird durch den als Achsträger ausgebildeten Hilfsrahmen mit den Merkmalen des Anspruchs 1 gelöst.

In den Längsträger eingebrachte Sicken, die etwa in Längserstreckungsrichtung der Längsträger verlaufen, bieten die Möglichkeit, das Flächenträgheitsmoment bzw. das Widerstandsmoment des Längsträgers anforderungsgerecht zu optimieren. Durch die Anbringung der Sicken im Bereich der Sollknickstelle kann der Kraftverlauf über den gesamten Längsträger innerhalb eines vorgegebenen Kraftkorridors gehalten werden. Die absorbierte Energie wird gleichmäßig von den Längsträgern aufgenommen und gleichmäßig auf die Längsträger verteilt. Der Randfaserabstand wird stabilisiert und der Längsträger kann des im Fahrzeugbereich geforderten Leichtbaus wegen dünnwandig und eine lediglich geringe Höhe aufweisend hergestellt werden. Da die Sicken im Bereich von als Krümmung im Längsträger ausgebildeten Sollknickstellen eingebracht sind, kann insbesondere das Biege- bzw. Knickverhalten des Längsträgers im Crashfall gut beeinflusst werden. Die Sicken können außerdem während des Herstellprozesses der Längsträger auf einfache Weise in die Längsträger eingebracht werden. Zudem kann der Längsträger beziehungsweise das ganze Strukturelement konstruktiv einfach gestaltet werden.

Es ist denkbar, dass jeder der Längsträger mindestens zwei und bevorzugt genau zwei Sollknickstellen aufweist. So können sich die Längsträger im Crashfall etwa Z-förmig verformen, so dass die Aufprallenergie von den Längsträgern durch gegenseitige Abstützung der Z-Schenkel gut in Deformationsenergie umgewandelt wird. Zudem kann so die Fahrgastzelle günstig vor Deformation geschützt werden.

Es ist denkbar, dass der jeweilige Längsträger an jeder Sollknickstelle mindestens eine Sicke aufweist. So kann das Flächenträgheitsmoment jeder Sollknickstelle weitestgehend unabhängig voneinander erhöht werden was eine gute Steuerung des Crashverhaltens des gesamten Hilfsrahmens ermöglicht.

Möglicherweise können im Bereich einer Sollknickstelle mehrere Sicken nebeneinander an den Längsträger angeordnet sein. Dadurch können die bei einem Crash eingetragenen Kräfte vorteilhaft auf mehrere Sicken verteilt wirken, wodurch das Widerstandsmoment des Längsträgers optimiert werden kann.

Optional können die Sicken auf der in Knickrichtung der Sollknickstelle liegenden Seite der Längsträger und/oder auf der der Knickrichtung der Sollknickstelle gegenüberliegenden Seite der Längsträger angeordnet sein. Je nachdem, auf welcher Seite des Längsträgers sich die Sicke befindet, kann das Deformationsverhalten des Hilfsrahmens vorteilhaft gewünschten Bedingungen angepasst werden.

Möglicherweise kann sich die Zarge der Sicke in Knickrichtung der Sollknickstelle und bevorzugt in einer zur Knickrichtung der Sollknickstelle entgegengesetzten Richtung erstrecken. Die Formgebung der Sicken lässt sich so an den vorhandenen Bauraum anpassen, wobei das Crashverhalten stets gut beeinflusst werden kann.

Es ist denkbar, dass in einem Längsträger eine erste Sollknickstelle bezüglich der Richtung der Krafteinwirkung vor einer zweiten Sollknickstelle angeordnet ist, wobei die erste Sollknickstelle eine stärkere Krümmung als die zweite Sollknickstelle aufweist. Das Deformationsverhalten des Hilfsrahmens kann dadurch so beeinflusst werden, dass die näher zur Fahrzeugfront liegende erste Sollknickstelle früher als die in Fahrtrichtung dahinterliegende zweite Sollknickstelle abknickt, was zu einer Erhöhung der Sicherheit der Fahrgastzelle beiträgt.

Erfindungsgemäß weist eine Sicke eine entlang der Längserstreckung des Längsträgers zu bemessende Länge auf, welche mit dem Grad der Krümmung einer Sollknickstelle korreliert, wobei eine im Bereich einer ersten Sollknickstelle, welche stärker gekrümmt ist, als eine zweite Sollknickstelle, vorgesehene Sicke kürzer ist, als eine im Bereich der zweiten Sollknickstelle vorgesehene Sicke. So kann das Knickverhalten des jeweiligen Längsträgers trotz einer weniger stark ausgeprägten Krümmung der Sollknickstelle gut gesteuert werden. Außerdem kann durch die Länge der Sicke das Flächenträgheitsmoment des Längsträgers im Bereich der jeweiligen Sollknickstelle einem gewünschten Lastfall entsprechend angepasst werden.

Erfindungsgemäß weist eine Sicke eine quer zur Längserstreckungsrichtung des Längsträgers zu bemessende Breite auf, wobei die Breite der Sicke etwa die Breite des Längsträgers, bevorzugt etwa dreiviertel der Breite des Längsträgers, besonders bevorzugt etwa die Hälfte der Breite des Längsträgers und im speziellen etwa ein Viertel der Breite des Längsträgers aufweist. So kann der Randfaserabstand des Längsträgers einfach und gut beeinflusst werden. Dadurch kann das Flächenträgheitsmoment des Längsträgers im Bereich der jeweiligen Sollknickstelle einem im Lastfall gewünschten Deformationsverhalten entsprechend angepasst werden

Die Längsträger können möglicherweise im Bereich der Sollknickstellen einen etwa rechteckigen Querschnitt aufweisen. So kann die Torsionssteifigkeit der Längsträger hoch gehalten werden und der Längsträger kann trotz niedriger Bauhöhe ein gutes Knickverhalten gemäß einem im Lastfall gewünschten Deformationsverhalten aufweisen.

Die Längsträger können beispielsweise jeweils einstückig ausgebildet sein. So lassen sich die Längsträger einfach und kostengünstig herstellen.

Es ist denkbar, dass die Längsträger jeweils mehrteilig, insbesondere aus zwei Halbschalen ausgebildet sind, wobei beide Halbschalen aus dem gleichen Material und bevorzugt aus unterschiedlichen Materialgüten und Wandstärken gefertigt sind. Das Flächenträgheitsmoment bzw. das Widerstandsmoment des gesamten Längsträgers kann so vorteilhaft in Kombination mit den Sicken gemäß einem im Lastfall gewünschten Deformationsverhalten beeinflusst werden.

Eine mögliche Ausführungsform der Erfindung wird anhand der Zeichnungen erläutert. Es zeigen:
- Figur 1: einen erfindungsgemäßen Hilfsrahmen in einer Perspektivansicht,
- Figur 2: einen erfindungsgemäßen Hilfsrahmen in einer Draufsicht,
- Figur 3: einen erfindungsgemäßen Hilfsrahmen in einer Ansicht von unten,
- Figur 4: ein Kraft-Weg-Diagramm, welches den Stand der Technik abbildet,
- Figur 5: ein Kraft-Weg-Diagramm des erfindungsgemäßen Hilfsrahmens,
- Figur 6: einen Teilausschnitt eines Längsträgers eines erfindungsgemäßen Hilfsrahmens in einer Draufsicht,
- Figur 7: eine Schnittansicht des Längsträgers aus Figur 6 entlang einer Schnittlinie B-B,
- Figur 8: eine weitere Schnittdarstellung eines Längsträgers in einer Perspektivansicht,
- Figur 9: eine Schnittansicht des Längsträgers aus Figur 6 entlang der Schnittlinie A-A, und
- Figur 10: einen nach einem Crash verformten Längsträger eines erfindungsgemäßen Hilfsrahmens.

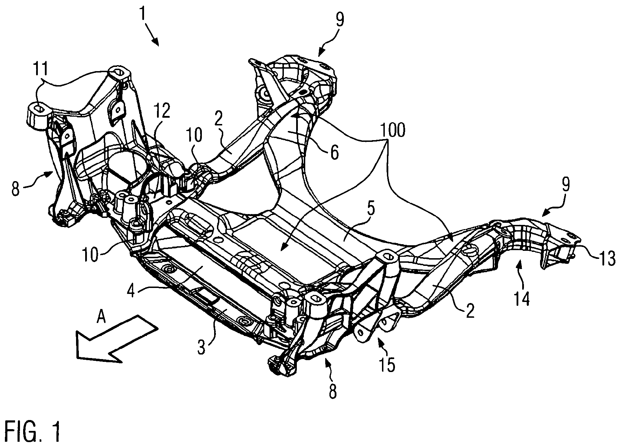

Die Figuren 1, 2 und 3 zeigen einen erfindungsgemäßen Hilfsrahmen 1 für die Front eines Kraftfahrzeugs. Der in Figur 1 eingezeichnete Pfeil A weist in Fahrtrichtung des Fahrzeugs und verdeutlicht somit die Einbaulage des Hilfsrahmens 1. Die nachfolgend verwendeten Begriffe "vorne" und "hinten" sind so auszulegen, dass sich diese auf die durch den Pfeil A dargestellte Fahrtrichtung beziehen.

Der Hilfsrahmen 1 weist zwei sich in Fahrtrichtung längs erstreckende Längsträger 2 auf. An einem vorderen Abschnitt der Längsträger 2 ist ein Querträger 3 angebracht, der sich zwischen den beiden Längsträgern 2 erstreckt. Der Querträger 3 ist mit den Längsträgern 2 verschweißt, oder vorzugsweise verschraubt.

Zwischen den beiden Längsträgern 2 erstreckt sich zu Versteifungszwecken außerdem eine etwa X-förmig ausgebildete Querbrücke 5. Die Querbrücke 5 ist mit ihren Enden 6, 7 beidseitig jeweils mit einem der beiden Längsträger 2, bevorzugt über eine Schweißverbindung, verbunden. Die Querbrücke 5 ist vorzugsweise als eine zweischalige Blechkonstruktion ausgeführt und versteift den gesamten Hilfsrahmen 1.

Aufgrund der Verbindung zwischen den Längsträgern 2 mit der Querbrücke 5, bilden die Längsträger 2 zusammen mit der Querbrücke 5 ein einteiliges, mehrschaliges Strukturelement 100 aus.

Zwischen dem Querträger 3 und der Querbrücke 5 erstreckt sich ein Unterfahrschutz 4. Dieser Unterfahrschutz 4 erstreckt sich in Quererstreckungsrichtung außerdem zwischen den beiden Längsträgern 2. Der Unterfahrschutz 4 kann aus Kunststoff bestehen und vorzugsweise mit dem Querträger 3 verschraubt werden. Es ist jedoch auch vorstellbar, dass der Unterfahrschutz 4 einstückig mit dem Querträger 3, bevorzugt in Form einer Blechkonstruktion, ausgebildet ist. Dieser kann dann ebenfalls an den beiden Längsträgern 2 angebracht, vorteilhafter Weise angeschweißt werden, und den Hilfsrahmen 1 somit zusätzlich versteifen.

Jeder der beiden Längsträger 2 weist an dessen vorderen Ende ein Knotenelement 8, und an dessen hinteren Ende ein Knotenelement 9 auf. Das vordere Knotenelement 8 ist als ein Gussteil, insbesondere als ein Aluminiumgussteil ausgeführt und über Anbindungspunkte 10 mit dem Längsträger 2 verschraubt. Es ist jedoch auch vorstellbar, dass das vordere Knotenelement 8 beispielsweise als eine Stahlblechkonstruktion ausgeführt ist und mit dem Längsträger 2 beispielsweise verschweißt ist.

An einem dem Längsträger 2 entfernt liegenden, das heißt oberen beziehungsweise der Fahrzeugkarosserie zugewandten Ende weist das vordere Knotenelement 8 zwei Karosserie-Anbindungspunkte 11 auf. Über diese Karosserie-Anbindungspunkte 11 wird der Hilfsrahmen 1 mit der hier nicht dargestellten Karosserie des Fahrzeugs verbunden. An den Karosserieanbindungspunkten 11 wird der Hilfsrahmen 1 bevorzugt an den darüber verlaufenden, hier nicht dargestellten, Längsträgern der Fahrzeug-Karosserie verschraubt.

Das vordere Knotenelement 8 weist zwischen den beiden Anbindungspunkten 10 einen etwa tunnelartigen Ausschnitt 12 auf. Durch diesen Ausschnitt 12 können die quer über den Hilfsrahmen 1 verlaufenden Komponenten einer hier ebenfalls nicht dargestellten Lenkung des Fahrzeugs nach außen geführt werden.

An einem dem vorderen Knotenelement 8 gegenüberliegenden hinteren Ende der Längsträger 2 weisen diese jeweils ein hinteres Knotenelement 9 auf. Die hinteren Knotenelement 9 sind bevorzugt mit dem Längsträger 2 verschweißt. Die hinteren Knotenelemente 9 weisen eine etwa bogenartig zu den Fahrzeugaußenseiten sowie nach unten, das heißt in Richtung der Fahrbahn hin verlaufende Form auf. Das hintere Verbindungselement 13 des Knotenelements 9 dient ebenfalls der Anbringung des Hilfsrahmens 1 an die Fahrzeugkarosserie. An dem Verbindungselement 13 wird der Hilfsrahmen 1 bevorzugt im Bereich der Seitenschweller des Fahrzeugs mit diesem verschraubt.

Der Hilfsrahmen 1 weist im Bereich des hinteren Knotenelements 9 eine hintere Konsole 14 zur Aufnahme eines Abschnitts eines Querlenkers, insbesondere eines Dreiecks-Querlenkers, auf. Im Bereich des vorderen Knotenelements 8 weist der Hilfsrahmen 1 eine vordere Konsole 15 zur Aufnahme eines weiteren Abschnitts des Querlenkers auf.

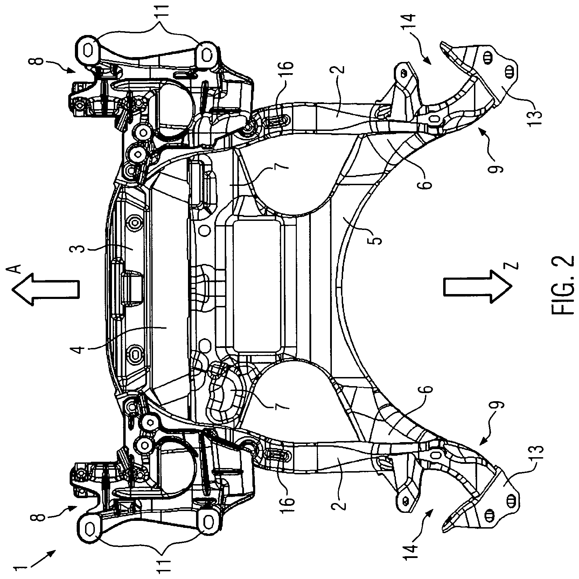

Figur 2 zeigt eine Draufsicht des Hilfsrahmens 1. Es ist zu erkennen, dass die Längsträger 2 im Bereich des hinteren Knotenelements 9 einen etwa runden rohrförmigen Querschnitt aufweisen. Im Bereich des vorderen Knotenelements 8 weisen die Längsträger 2 hingegen einen zusammengedrückten, etwa rechteckigen rohrförmigen Querschnitt auf. Der Übergang von dem etwa runden zu dem etwa rechteckigen rohrförmigen Querschnitt erfolgt vorzugsweise durchgehend zwischen dem Bereich des hinteren Knotenelements 9 zu dem vorderen Knotenelement 8 hin.

In Figur 2 ist des Weiteren zu erkennen, dass der Längsträger 2 auf seiner Oberseite eine Sicke 16 aufweist, welche zumindest abschnittsweise im Bereich des rechteckigen Querschnitts des Längsträgers 2 angeordnet ist.

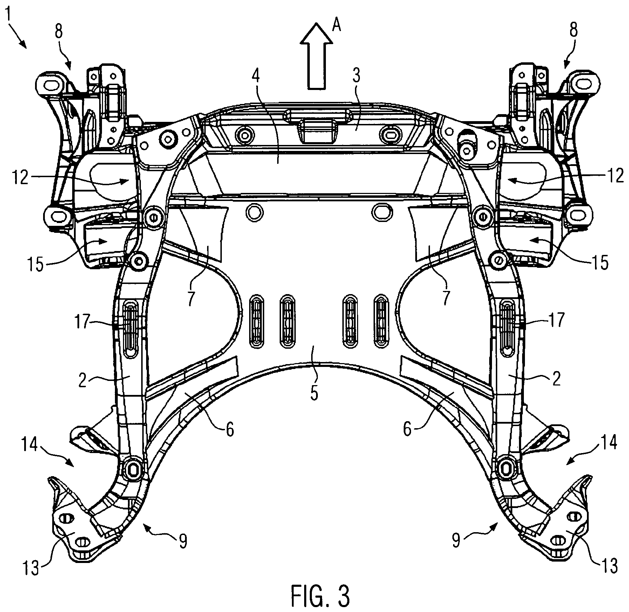

Figur 3 zeigt eine Ansicht des Hilfsrahmens 1 von unten. Hier ist zu erkennen, dass der Längsträger 2 auf dessen Unterseite eine zweite Sicke 17 aufweist, welche zumindest abschnittsweise im Bereich des etwa rechteckigen Querschnitts des Längsträgers 2 angeordnet ist.

Der Hilfsrahmen 1 dient unter anderem dazu, die in einem Crashfall auftretende Aufprallenergie zumindest teilweise in Deformationsenergie umzuwandeln. Es wird demnach die kinetische Energie in potentielle Energie umgewandelt. Der Hilfsrahmen 1 agiert hierbei als ein Biegeträger.

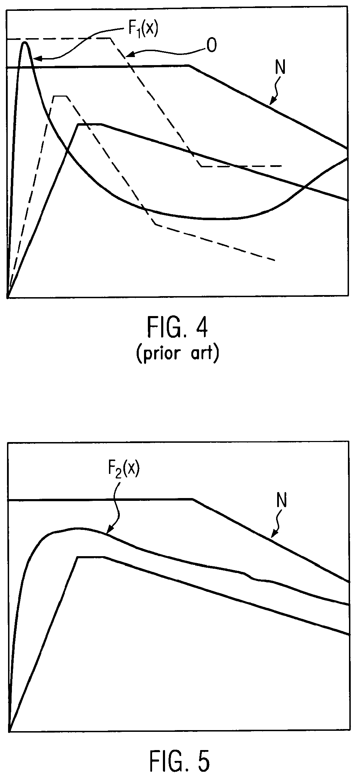

In Figur 4 ist ein Kraft-Weg-Diagramm eines aus dem Stand der Technik bekannten Hilfsrahmens abgebildet. Das Diagramm zeigt auf der y-Achse die Kraft (Force) in Newton, die nötig ist, um die Länge des Hilfsrahmens im Deformationsfall um den auf der X-Achse angetragenen Betrag in Millimeter zu ändern (Displacement). Der in Figur 4 dargestellte Graph F₁(x) zeigt diesen Zusammenhang zwischen Kraft und Längenänderung in einem Ersatzlastfall für den aus dem Stand der Technik bekannten Hilfsrahmen.

Ein gewünschtes Deformationsverhalten derartiger Hilfsrahmen wird mit Hilfe sogenannter "Crash-Windows" festgelegt. Figur 4 zeigt ein erstes Crash-Window O, welches mit Strichlinien dargestellt ist. Es ist zu erkennen, dass der Graph F₁(x) zumindest abschnittsweise innerhalb des Crash-Windows O verläuft. Der durch den Graphen F₁(x) dargestellte, aus dem Stand der Technik bekannte Hilfsrahmen entspricht somit grob den durch das Crash-Window O festgelegten Anforderungen zum Deformationsverhalten im Crashfall.

Vom Nullpunkt des Koordinatensystems aus betrachtet, weist der Graph F₁(x) eine sehr stark ansteigende Flanke auf. Demnach ist im Crashfall anfänglich eine sehr hohe Kraft nötig, um eine anfängliche Längenänderung des Hilfsrahmens zu erreichen. Nach Erreichen des Hochpunkts fällt der Graph F₁(x) mit einer stark fallenden Flanke ab, was etwa den Vorgaben des Crash-Windows O entspricht, obwohl sich diese abfallende Flanke zu einem Großteil nicht in dem Korridor des Crash-Windows O befindet.

Der weitere Verlauf des Graphen F₁(x) zeigt, dass für eine weitere Längenänderung des Hilfsrahmens eine wesentlich kleinere Kraft ausreichend ist. Dies resultiert daraus, dass Versteifungselemente bekannter Hilfsrahmen Sollknickstellen aufweisen, so dass das Versteifungselement im Crashfall nach unten wegknickt. Es ist somit anfänglich eine hohe Kraft nötig, um das Widerstandsmoment des Versteifungselements zu überwinden. Sobald dieses Widerstandsmoment jedoch überwunden ist, beginnt die Knickung des Versteifungselements und das Widerstandsmoment wird dadurch erheblich reduziert. Somit erfolgt die weitere Längenänderung des gesamten Hilfsrahmens, wie in Figur 4 dargestellt, mit einer wesentlich geringeren Kraft.

In Figur 4 ist in durchgezogenen Linien ein weiteres Crash-Window N abgebildet. Der Korridor dieses Crash-Windows N zeigt ein neues gewünschtes Crashverhalten. Im Vergleich zu dem Crash-Window O reicht hier anfänglich eine geringere Kraft für eine größere Längenänderung des Hilfsrahmens aus. Weitere Längenänderungen verlangen jedoch eine größere Kraft, was sich in dem entlang der X-Achse flacher verlaufenden Korridor des Crash-Windows N ausdrückt.

In Figur 5 ist dieses neue Crash-Window N noch einmal dargestellt. Der hier abgebildete Graph F₂(x) repräsentiert den Hilfsrahmen 1 der vorliegenden Erfindung. Der Graph F₂(x) befindet sich vollständig innerhalb des Korridors des neuen Crash-Windows N. Dementsprechend weist der erfindungsgemäße Hilfsrahmen 1 ein durch das Crash-Window N dargestelltes gewünschtes Deformationsverhalten auf. Wie nachfolgend näher erläutert, kann dieses Deformationsverhalten maßgeblich von den in den Längsträger 2 eingebrachten Sicken 16, 17 beeinflusst werden.

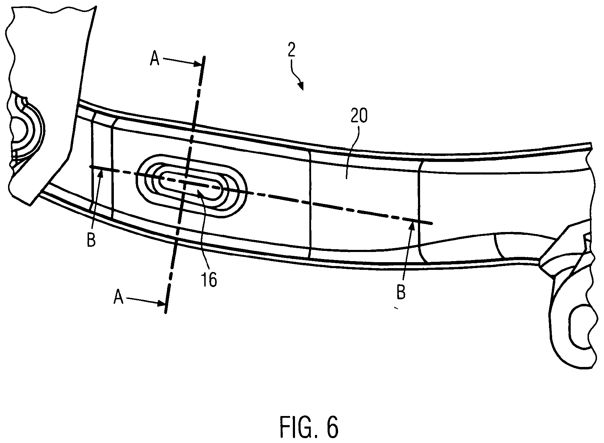

Figur 6 zeigt einen Ausschnitt eines Längsträgers 2 eines erfindungsgemäßen Hilfsrahmens 1 in der Draufsicht. Die Sicke 16 befindet sich auf der Oberseite 20 des Längsträgers 2. Die Sicke 16 erstreckt sich etwa in Längserstreckungsrichtung des Längsträgers 2.

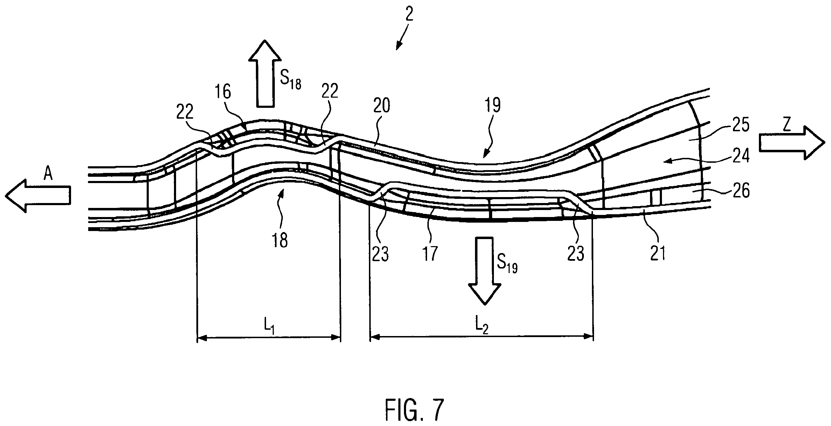

Figur 7 zeigt einen Schnitt durch den Längsträger 2 entlang der in Figur 6 abgebildeten Schnittlinie B-B. Der Längsträger 2 weist zwei in Längserstreckungsrichtung des Längsträgers 2 verlaufende Krümmungen 18, 19 auf. Die Krümmung 18 liegt in Fahrtrichtung A gesehen vor der zweiten Krümmung 19. Die beiden Krümmungen 18, 19 bilden eine Sollknickstelle, an welcher der Längsträger 2 im Crashfall einzuknicken beginnt. Da die erste Sollknickstelle 18, die in Fahrtrichtung A vor der zweiten Sollknickstelle 19 angeordnet ist, eine stärkere Krümmung als die zweite Sollknickstelle 19 aufweist, knickt die erste Sollknickstelle 18 im Crashfall früher ein als die zweite Sollknickstelle 19.

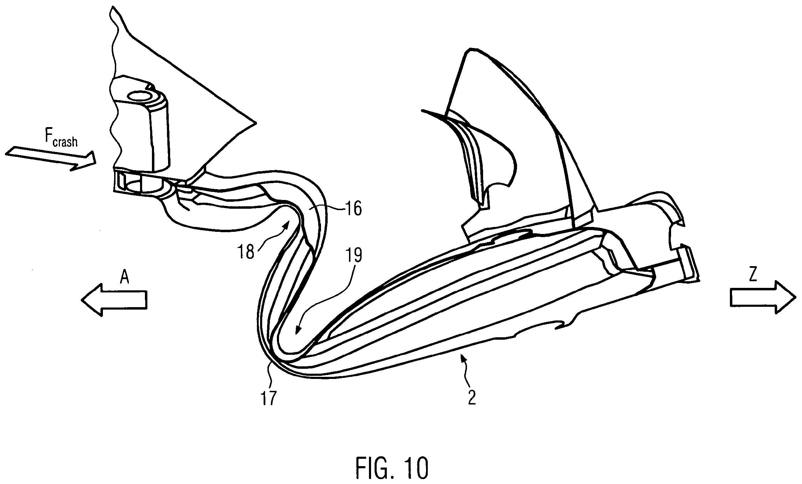

Ein solcher Crashfall ist in Figur 10 dargestellt. Beim Einwirken einer Kraft, dargestellt durch den Vektor F_{crash}, knickt der Längsträger 2 zunächst an der ersten Krümmung 18 und anschließend an der zweiten Krümmung 19 ein. Die beiden Krümmungen 18, 19 bilden also eine Sollknickstelle. Im vorliegenden Fall knickt der Längsträger 2 etwa Z-förmig zusammen, wobei sich der bezüglich der Richtung der Krafteinwirkung F_{crash} (hier: in Fahrtrichtung A) vorne liegende Abschnitt des Längsträgers 2 im Bereich der ersten Sollknickstelle 18 über den im Bereich der zweiten Sollknickstelle 19 befindlichen hinteren Abschnitt des Längsträgers 2 schiebt.

In Figur 7 sind die Knickrichtungen der beiden Sollknickstellen 18, 19 eingezeichnet. Bei einem Crash knickt die Sollknickstelle 18 nach oben, das heißt in Richtung des Pfeils S₁₈ aus. Die Sollknickstelle 19 knickt nach unten aus, das heißt in Richtung des Pfeils S₁₉.

Es ist verständlich, dass sich im Falle einer um 180° in der Längsachse gespiegelten Geometrie der Krümmungen 18, 19 die Knickrichtungen S₁₈, S₁₉ entsprechend umkehren. Somit würde sich die Z-Form im, mit Bezug auf Figur 10 erläuterten Crashfall ebenfalls umkehren und der vordere Abschnitt des Längsträgers 2 würde sich unter den hinteren Abschnitt des Längsträgers 2 schieben.

Die Sicke 16 ist im Bereich der ersten Krümmung 18 angeordnet und die Sicke 17 ist im Bereich der zweiten Krümmung 19 angeordnet. In dem abgebildeten Ausführungsbeispiel liegen die Sicken 16, 17 jeweils auf der in Knickrichtung S₁₈, S₁₉ der jeweiligen Sollknickstelle 18, 19 liegenden Seite des Längsträgers 2. Die Sicke 16 liegt also auf der Oberseite 20 des Längsträgers 2 und die Sicke 17 liegt auf der Unterseite 21 des Längsträgers 2.

Es ist auch vorstellbar, dass die Sicken 16, 17 auf der der Knickrichtung S₁₈, S₁₉ der jeweiligen Sollknickstelle 18, 19 gegenüberliegenden Seite des Längsträgers 2 angeordnet sind. Außerdem ist es möglich, dass auf beiden Seiten 20, 21 des Längsträgers 2 Sicken angeordnet sind.

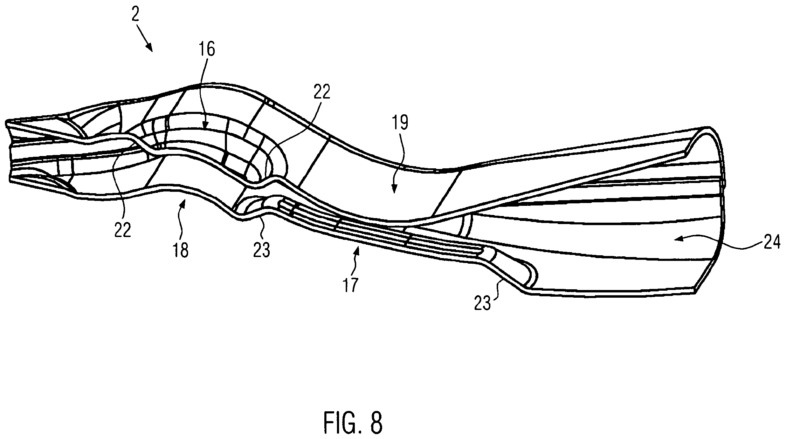

Wie insbesondere in den Figuren 7 und 8 zu sehen, erstreckt sich die Zarge 22 der Sicke 16 in einer zur Knickrichtung S₁₈ entgegengesetzten Richtung. Die Zarge 23 der Sicke 17 erstreckt sich ebenfalls in einer zur KnickrichtungS₁₉ entgegengesetzten Richtung. In dem Ausführungsbeispiel erstrecken sich die Zargen 22, 23 demnach in den Innenraum 24 des als Hohlprofil ausgebildeten Längsträgers 2.

Die Zargen 22, 23 können sich jedoch auch in Knickrichtung S₁₈, S₁₉ erstrecken. Dabei ist es unwesentlich, ob sich die jeweilige Sicke 16, 17 auf der Oberseite 20 oder der Unterseite 21 des Längsträgers 2 befindet, oder ob sich jeweils auf der Oberseite 20 und der Unterseite 21 an jeder Sollknickstelle 18, 19 eine oder mehrere Sicken befinden. Die Anordnung und Ausprägung der Sicken richtet sich nach dem gewünschten Deformationsverhalten im Crashfall.

In Figur 7 ist des Weiteren zu erkennen, dass die Sicken 16, 17 jeweils eine entlang der Längserstreckung des Längsträgers 2 zu bemessende Länge L₁, L₂ aufweisen, welche mit dem Grad der Krümmung der jeweiligen Sollknickstelle 18, 19 korreliert. Das heißt, je stärker die Krümmung der Sollknickstelle ist, desto kürzer ist die Länge der an dieser Stelle eingeformten Sicke. Im vorliegenden Ausführungsbeispiel weist die erste Sollknickstelle 18 eine stärkere Krümmung auf als die zweite Sollknickstelle 19. Dementsprechend ist die Länge L₁ der Sicke 16 kleiner als die Länge L₂ der Sicke 17.

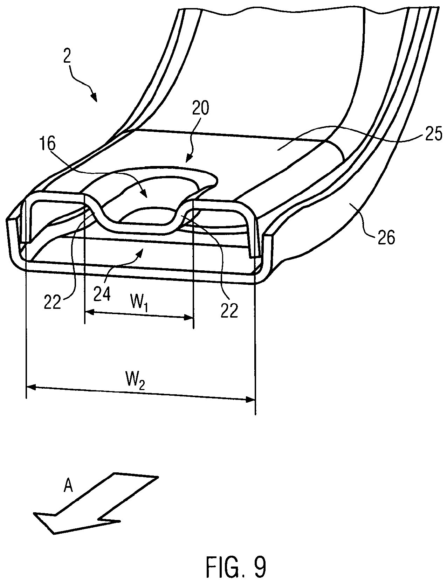

Figur 9 zeigt eine Querschnittsansicht eines Längsträgers 2 entlang der in Figur 6 abgebildeten Schnittlinie A-A. Auf der Oberseite 20 des Längsträgers 2 ist die Sicke 16 eingebracht, deren Zargen 22 sich in den Innenraum 24 des Längsträgers 2 erstrecken.

Jeweils am Übergang der Zargen 22 zu der Oberseite 20 wird eine Breite W₁ der Sicke 16 gemessen. Der Längsträger 2 weist eine Breite W₂ auf. In dem in Figur 9 abgebildeten Ausführungsbeispiel beträgt die Breite W₁ der Sicke 16 ungefähr die Hälfte der Breite W₂ des Längsträgers 2.

Durch dieses Verhältnis W₁:W₂ kann der Randfaserabstand des als Biegeträger ausgebildeten Längsträgers 2 und somit dessen Nachgiebigkeit gegen Verformung eingestellt werden. Je weiter sich die Breite W₁ der Sicke 16 der Breite W₂ des Längsträgers 2 annähert, desto geringer wird der Randfaserabstand, und das Flächenträgheitsmoment des Längsträgers 2 steigt an. Somit kann durch die Dimensionierung der Sicken 16, 17 das Deformationsverhalten des Längsträgers 2 an dessen Sollknickstellen 18, 19 derart beeinflusst werden, dass es beispielsweise den gewünschten Vorgaben gemäß dem in Figur 5 abgebildeten Crash-Window N entspricht.

Insbesondere in den Figuren 7 und 9 ist zu erkennen, dass der Längsträger 2 als ein Hohlprofil ausgebildet ist. Der Längsträger 2 weist einen Obergurt 25 und einen Untergurt 26 auf, welche jeweils als Halbschalen ausgebildet sind. Obergurt 25 und Untergurt 26 sind miteinander verbunden, beispielsweise wie in Figur 9 gezeigt, miteinander verpresst. Ober- und Untergurt 25, 26 können jedoch auch miteinander verschweißt, verschraubt oder nach anderen gängigen Fügeverfahren miteinander verbunden sein.

Die in Figur 9 abgebildeten Halbschalen 25, 26 bestehen aus unterschiedlichen Materialien. So kann beispielsweise der Obergurt 25 aus hochfestem Aluminium und der Untergurt 26 aus Stahlblech, oder anders herum gefertigt sein. Es ist auch vorstellbar, dass der Obergurt 25 aus hochfestem Stahl, beispielsweise zur Erfüllung der gewünschten Festigkeitseigenschaften, und der Untergurt 26 aus kostengünstigem Stahlblech, beziehungsweise anders herum gefertigt ist. Es ist jedoch auch vorstellbar, dass der als Hohlprofil ausgebildete Längsträger 2 einstückig ausgebildet ist und beispielsweise durch Explosions- oder Hydroformen hergestellt ist.

Die oben beschriebene Ausführungsform wurde beispielhaft anhand eines im Frontbereich, das heißt im Bereich der Vorderachse eines Fahrzeugs anbringbaren Hilfsrahmens 1 diskutiert. Wie eingangs erwähnt, ist es jedoch auch möglich, den Hilfsrahmen 1 im Heckbereich, das heißt im Bereich einer Hinterachse eines Fahrzeugs anzubringen.

Dem Fachmann ist hierbei ersichtlich, dass sich bezüglich der Einbaulage des Hilfsrahmens 1 in einem solchen Fall die durch den Richtungspfeil A dargestellte Fahrtrichtung umkehrt. Dies ist beispielhaft in den Figuren 2, 7 und 10 durch den Richtungspfeil Z dargestellt. Die außerdem in Figur 10 dargestellte, im Crashfall auf den Hilfsrahmen 1 einwirkende Kraft F_{crash} bleibt jedoch unverändert.

## Patentansprüche

1. Als Achsträger ausgebildeter Hilfsrahmen (1) für ein Fahrzeug, der zwei Längsträger (2) sowie eine zwischen den beiden Längsträgern (2) angeordnete Versteifungsstruktur (4, 5) aufweist, wobei die Längsträger (2) im Wesentlichen als Hohlprofil ausgeführt sind und mindestens eine Sollknickstelle (18, 19) in Form einer in Längserstreckungsrichtung der Längsträger (2) verlaufenden Krümmung aufweisen, wobei die Längsträger (2) im Bereich der Sollknickstelle (18, 19) mindestens eine etwa in Längserstreckungsrichtung der Längsträger (2) verlaufende Sicke (16, 17) aufweisen, **dadurch gekennzeichnet, dass** eine im Bereich einer ersten Sollknickstelle (18), welche stärker gekrümmt ist als eine zweite Sollknickstelle (19), vorgesehene Sicke (16) kürzer ist als eine im Bereich der zweiten Sollknickstelle (19) vorgesehene Sicke (17), und eine Sicke (16, 17) eine entlang der Längserstreckung des Längsträgers (2) zu bemessende Länge (L1, L2) aufweist, welche mit dem Grad der Krümmung einer Sollknickstelle (18, 19) korreliert, und eine Sicke (16) eine quer zur Längserstreckungsrichtung des Längsträgers (2) zu bemessende Breite (W1) aufweist, wobei die Breite der Sicke (16) etwa die Breite (W2) des Längsträgers (2), bevorzugt etwa dreiviertel der Breite (W2) des Längsträgers (2), besonders bevorzugt etwa die Hälfte der Breite (W2) des Längsträgers (2) und im Speziellen etwa ein viertel der Breite (W2) des Längsträgers (2) aufweist.

2. Hilfsrahmen (1) nach Anspruch 1, **dadurch gekennzeichnet, dass** jeder der Längsträger (2) mindestens zwei und bevorzugt genau zwei Sollknickstellen (18, 19) aufweist.

3. Hilfsrahmen (1) nach Anspruch 2, **dadurch gekennzeichnet, dass** der jeweilige Längsträger (2) an jeder Sollknickstelle (18, 19) mindestens eine Sicke (16, 17) aufweist.

4. Hilfsrahmen (1) nach einem der vorhergehenden Ansprüche, **dadurch gekennzeichnet, dass** im Bereich einer Sollknickstelle (18, 19) mehrere Sicken (16, 17) nebeneinander an dem Längsträger (2) angeordnet sind.

5. Hilfsrahmen (1) nach einem der vorhergehenden Ansprüche, **dadurch gekennzeichnet, dass** die Sicken (16, 17) jeweils auf der in Knickrichtung (S18, S19) der Sollknickstellen (18, 19) liegenden Seite der Längsträger (2) und/oder auf der der Knickrichtung (S18, S19) der Sollknickstellen (18, 19) gegenüberliegenden Seite der Längsträger (2) angeordnet sind.

6. Hilfsrahmen (1) nach einem der vorhergehenden Ansprüche, **dadurch gekennzeichnet, dass** sich die Zarge (22, 23) der Sicke (16, 17) in Knickrichtung (S18, S19) der Sollknickstelle (18, 19) und bevorzugt in einer zur Knickrichtung (S18, S19) der Sollknickstelle (18, 19) entgegengesetzten Richtung erstreckt.

7. Hilfsrahmen (1) nach einem der vorhergehenden Ansprüche, **dadurch gekennzeichnet, dass** in einem Längsträger (2) eine erste Sollknickstelle (18) bezüglich der Richtung der Krafteinwirkung (Fcrash) vor einer zweiten Sollknickstelle (19) angeordnet ist, wobei die erste Sollknickstelle (18) eine stärkere Krümmung als die zweite Sollknickstelle (19) aufweist.

8. Hilfsrahmen (1) nach einem der vorhergehenden Ansprüche, **dadurch gekennzeichnet, dass** die Längsträger (2) im Bereich der Sollknickstellen (18, 19) einen etwa rechteckigen Querschnitt aufweisen.

9. Hilfsrahmen (1) nach einem der vorhergehenden Ansprüche, **dadurch gekennzeichnet, dass** die Längsträger (2) jeweils einstückig ausgebildet sind.

10. Hilfsrahmen (1) nach einem der vorhergehenden Ansprüche, **dadurch gekennzeichnet, dass** die Längsträger (2) jeweils mehrteilig, insbesondere aus zwei Halbschalen (25, 26) ausgebildet sind, wobei beide Halbschalen (25, 26) aus dem gleichen Material und bevorzugt aus unterschiedlichem Material gefertigt sind.

## Claims

1. Subframe (1), which is designed as an axle carrier, for a vehicle, the subframe having two longitudinal members (2) and a reinforcing structure (4, 5) arranged between the two longitudinal members (2), wherein the longitudinal members (2) are substantially designed as a hollow profile and have at least one predetermined buckling point (18, 19) in the form of a curvature running in the direction of longitudinal extent of the longitudinal members (2), wherein the longitudinal members (2) have at least one bead (16, 17), which runs approximately in the direction of longitudinal extent of the longitudinal members (2), in the region of the predetermined buckling point (18, 19), **characterized in that** a bead (16) provided in the region of a first predetermined buckling point (18) which has a more pronounced curvature than a second predetermined buckling point (19) is shorter than a bead (17) provided in the region of the second predetermined buckling point (19), and one bead (16, 17) has a length (L1, L2) which is to be measured along the longitudinal extent of the longitudinal member (2) and correlates with the degree of curvature of a predetermined buckling point (18, 19), and one bead (16) has a width (W1) to be measured transversely with respect to the direction of longitudinal extent of the longitudinal member (2), wherein the width of the bead (16) has approximately the width (W2) of the longitudinal member (2), preferably approximately three quarters of the width (W2) of the longitudinal member (2), particularly preferably approximately half of the width (W2) of the longitudinal member (2) and especially approximately a quarter of the width (W2) of the longitudinal member (2).

2. Subframe (1) according to Claim 1, **characterized in that** each of the longitudinal members (2) has at least two and preferably precisely two predetermined buckling points (18, 19).

3. Subframe (1) according to Claim 2, **characterized in that** the longitudinal member (2) in question has at least one bead (16, 17) at each predetermined buckling point (18, 19).

4. Subframe (1) according to one of the preceding claims, **characterized in that**, in the region of a predetermined buckling point (18, 19), a plurality of beads (16, 17) are arranged next to one another on the longitudinal member (2).

5. Subframe (1) according to one of the preceding claims, **characterized in that** the beads (16, 17) are each arranged on that side of the longitudinal members (2) which lies in the buckling direction (S18, S19) of the predetermined buckling points (18, 19) and/or on that side of the longitudinal members (2) which lies opposite the buckling direction (S18, S19) of the predetermined buckling points (18, 19).

6. Subframe (1) according to one of the preceding claims, **characterized in that** the frame (22, 23) of the bead (16, 17) extends in the buckling direction (S18, S19) of the predetermined buckling point (18, 19) and preferably in a direction opposed to the buckling direction (S18, S19) of the predetermined buckling point (18, 19).

7. Subframe (1) according to one of the preceding claims, **characterized in that**, in a longitudinal member (2), a first predetermined buckling point (18) is arranged upstream of a second predetermined buckling point (19) with respect to the direction of the action of force (Fcrash), wherein the first predetermined buckling point (18) has a greater curvature than the second predetermined buckling point (19).

8. Subframe (1) according to one of the preceding claims, **characterized in that** the longitudinal members (2) have an approximately rectangular cross section in the region of the predetermined buckling points (18, 19).

9. Subframe (1) according to one of the preceding claims, **characterized in that** the longitudinal members (2) are each designed as a single piece.

10. Subframe (1) according to one of the preceding claims, **characterized in that** the longitudinal members (2) are each formed in multiple parts, in particular from two half shells (25, 26), wherein the two half shells (25, 26) are manufactured from the same material and preferably from different material.

## Revendications

1. Châssis auxiliaire (1) réalisé sous forme de support d'essieu pour un véhicule qui comprend deux supports longitudinaux (2) ainsi qu'une structure de rigidification (4, 5) disposée entre les deux supports longitudinaux (2), les supports longitudinaux (2) étant réalisés sensiblement sous forme de profilé creux et présentant au moins un emplacement destiné au pliage (18, 19) sous la forme d'une courbure s'étendant en direction d'extension longitudinale des supports longitudinaux (2),
dans lequel, dans la région de l'emplacement destiné au pliage (18, 19), les supports longitudinaux (2) présentent au moins une moulure (16, 17) qui s'étend approximativement en direction d'extension longitudinale des supports longitudinaux (2),
**caractérisé en ce qu'**une moulure (16), prévue dans la région d'un premier emplacement destiné au pliage (18) courbé plus fortement qu'un second emplacement destiné au pliage (19), est plus courte qu'une moulure (17) prévue dans la région du second emplacement destiné au pliage (19), et une moulure (16, 17) présente une longueur (L1, L2) à mesurer le long de l'extension longitudinale du support longitudinal (2) qui est en corrélation avec le degré de la courbure d'un emplacement destiné au pliage (18, 19), et une moulure (16) présente une largeur (W1) à mesurer transversalement à la direction d'extension longitudinale d'un support longitudinal (2), la largeur de moulure (16) présente approximativement la largeur (W2) du support longitudinal (2), de préférence approximativement trois quarts de la largeur (W2) du support longitudinal (2), de façon tout particulièrement préférée approximativement la moitié de la largeur (W2) du support longitudinal et spécialement approximativement un quart de la largeur (W2) du support longitudinal (2).

2. Châssis auxiliaire (1) selon la revendication 1, **caractérisé en ce que** chacun des supports longitudinaux (2) comprend au moins deux, de préférence exactement deux emplacements destinés au pliage (18, 19).

3. Châssis auxiliaire (1) selon la revendication 2, **caractérisé en ce que** le support longitudinal respectif (2) comprend au moins une moulure (16, 17) à chaque emplacement destiné au pliage (18, 19).

4. Châssis auxiliaire (1) selon l'une des revendications précédentes, **caractérisé en ce que** dans la région d'un emplacement destiné au pliage (18, 19), plusieurs moulures (16, 17) sont agencées les unes à côté des autres sur le support longitudinal (2).

5. Châssis auxiliaire (1) selon l'une des revendications précédentes, **caractérisé en ce que** les moulures (16, 17) sont agencées chacune sur le côté des supports longitudinaux (2) situé en direction de pliage (S18, S 19) des emplacements destinés au pliage (18, 19), et/ou sur le côté des supports longitudinaux (2) opposé à la direction de pliage (S18, S 19) des emplacements destinés au pliage (18, 19).

6. Châssis auxiliaire (1) selon l'une des revendications précédentes, **caractérisé en ce que** l'encadrement (22, 23) des moulures (16, 17) s'étend dans la direction de pliage (S18, S 19) de l'emplacement destiné au pliage (18, 19) et de préférence dans une direction opposée à la direction de pliage (S18, S19) de l'emplacement destiné au pliage (18, 19).

7. Châssis auxiliaire (1) selon l'une des revendications précédentes, **caractérisé en ce que** dans un support longitudinal (2), un premier emplacement destiné au pliage (18) est agencé en avant d'un second emplacement destiné au pliage (19) par rapport à la direction de l'action d'une force (Fcrash), le premier emplacement destiné au pliage (18) présentant une courbure plus prononcée que le second emplacement destiné au pliage (19).

8. Châssis auxiliaire (1) selon l'une des revendications précédentes, **caractérisé en ce que** les supports longitudinaux (2) présentent une section transversale approximativement rectangulaire dans la région des emplacements destinés au pliage (18, 19).

9. Châssis auxiliaire (1) selon l'une des revendications précédentes, **caractérisé en ce que** les supports longitudinaux (2) sont réalisés chacun d'un seul tenant.

10. Châssis auxiliaire (1) selon l'une des revendications précédentes, **caractérisé en ce que** les supports longitudinaux (2) sont réalisés chacun en plusieurs parties, en particulier par deux demi-coques (25, 26), les deux demi-coques (25, 26) étant fabriquées du même matériau ou de préférence en matériaux différents.
